(19) Europäisches Patentamt
European Patent Office
Office européen des brevets

(11) Veröffentlichungsnummer: **0 042 080**
**B1**

(12) # EUROPÄISCHE PATENTSCHRIFT

(45) Veröffentlichungstag der Patentschrift: **05.12.84**

(51) Int. Cl.³: **B 01 J 37/08**, B 01 J 37/00, B 01 J 8/16, F 26 B 17/26

(21) Anmeldenummer: **81103977.5**

(22) Anmeldetag: **23.05.81**

(54) **Verfahren zur thermischen Behandlung von pulverförmigen Katalysatoren und Katalysator-Zwischenprodukten.**

(30) Priorität: **13.06.80 DE 3022330**

(43) Veröffentlichungstag der Anmeldung: **23.12.81 Patentblatt 81/51**

(45) Bekanntmachung des Hinweises auf die Patenterteilung: **05.12.84 Patentblatt 84/49**

(84) Benannte Vertragsstaaten: **DE FR GB NL**

(56) Entgegenhaltungen:
**DE - A - 2 403 998**
**DE - B - 1 556 053**
**FR - A - 1 458 402**
**FR - E - 57 146**
**GB - A - 963 641**

(73) Patentinhaber: **SÜD-CHEMIE AG, Lenbachplatz 6, D-8000 München 2 (DE)**

(72) Erfinder: **Schneider, Michael, Dipl.-Chem. Dr., Waldparkstrasse 54a, D-8012 Ottobrunn-Riemerling (DE)**
Erfinder: **Kochloefl, Karl, Dipl.-Ing. Dr., Kreuzstrasse 2, D-8052 Moosburg (DE)**
Erfinder: **Diez, Gerhard, Dipl.-Ing., Josef-Raps-Strasse 3, D-8000 München 40 (DE)**
Erfinder: **Maier, Franz, Dipl.-Ing., Julius-von-Niethammerstrasse 9, D-8206 Bruckmühl/Heufeld (DE)**
Erfinder: **Rauch, Josef Erich, Forststrasse 12c, D-8052 Moosburg (DE)**
Erfinder: **Liebelt, Wolfgang, Dipl.-Chem., Auf dem Gries 11, D-8052 Moosburg (DE)**

(74) Vertreter: **Splanemann, Rainer, Dipl.-Ing. et al, Patentanwälte Dipl.-Ing. R. Splanemann, Dr. B. Reitzner Tal 13, D-8000 München 2 (DE)**

**EP 0 042 080 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Feste Katalysatoren, deren Ausgangs- oder Zwischenprodukte, durchlaufen im Rahmen der Fertigung zur Entfaltung der Wirksamkeit in den meisten Fällen eine thermische Behandlung. So gibt es z.B. viele oxidische Katalysatoren, die durch thermische Behandlung aus Vorstufen wie Hydroxiden, Carbonaten, Nitraten usw. hervorgehen.

Die katalytische Wirksamkeit dieser Katalysatoren ist vor allem von ihrer chemischen Zusammensetzung, ihren Oberflächeneigenschaften und ihrer Textur abhängig. Wird die thermische Behandlung in ungenügendem Masse durchgeführt, so erfolgt nur eine partielle Umwandlung des Vorläufers zum katalytisch wirksamen Stoff. Bei zu starker thermischer Einwirkung bzw. Überhitzung der thermisch zu behandelnden Materialien werden nicht die optimalen Oberflächeneigenschaften bzw. die gewünschte Textur bzw. Phasenzusammensetzung erreicht, wodurch auch die katalytische Wirksamkeit dieser Oxide unbefriedigend ist.

Es ist also von grosser Bedeutung, die thermische Einwirkung auf den Katalysator-Vorläufer so zu steuern, dass ein optimaler Calcinierungsgrad erreicht wird, und dass alle Teilchen des Katalysator-Vorläufers der gleichen thermischen Behandlung unterzogen werden.

Zurzeit erfolgt die thermische Behandlung von Katalysatoren in verschiedenartig konstruierten Öfen, mit denen sich das angeführte Ziel einer genau kontrollierten thermischen Behandlung nicht oder nur unvollkommen erreichen lässt.

Bei den sogenannten Hordenöfen werden die Horden oder Bleche mit der Katalysator-Vorstufe beladen, und diese wird meistens in direktem Kontakt mit Verbrennungsgasen der thermischen Behandlung unterzogen. Die Schichthöhe des Katalysatormaterials auf den Blechen beträgt aus Wirtschaftlichkeitsgründen mehrere Zentimeter, oft bis zu 5–6 cm. Hierbei ist es unvermeidlich, dass die Teile des Behandlungsgutes, welche sich an den Oberflächen, Rändern und Ecken der Horden befinden, schneller den gewünschten Calcinierungsgrad erreichen als die sich im Inneren befindlichen Teile, weshalb eine gleichmässige Calcinierung aller Teile nicht möglich ist. Weiterhin kann die Energieverteilung auf die einzelnen Horden nicht gleichmässig vorgenommen werden. Das auf den obersten und untersten Blechen im Hordenwagen liegende Behandlungsgut ist eher calciniert als das auf den mittleren Blechen liegende.

Bandöfen weisen für pulverförmige Stoffe ähnliche Nachteile auf. Perforierte Bänder sind aus offensichtlichen Gründen nicht anwendbar. Aus wirtschaftlichen Gründen ist man auf bestimmte Mindestschichthöhen des Gutes auf dem Band angewiesen. Die auf der Oberfläche der Schicht befindlichen Anteile sind wegen der Wärmedämmung in der Schicht zum Zeitpunkt der optimalen Calcinierung der Anteile im Inneren längst überheizt worden.

Bei direkt beheizten Drehrohröfen ist bekanntlich kein gleichmässiger Materialtransport möglich. So wandern je nach Kornverteilung und Schüttungsablauf die Teile mit unterschiedlicher Verweilzeit durch den Ofen. Daraus resultiert eine ungleichmässige thermische Behandlung. Indirekt beheizte Drehrohröfen werden eingesetzt, wenn der direkte Kontakt des Behandlungsgutes mit dem Heizgas unerwünscht ist. Der Nachteil dieser Öfen liegt darin, dass es hier zu Überhitzung des die heissen Wände berührenden Materials und zu einer Untercalcinierung des übrigen Gutes kommt.

Zur Behebung der geschilderten Nachteile sind Trocknungs- und Calcinier-Aggregate konstruiert worden, bei denen das Gut in einer Wirbelschicht thermisch behandelt wird. Die Feststoffteilchen werden hierbei durch das gasförmige Heizmedium in der Schwebe gehalten. Mit solchen Aggregaten wird die gleichmässige thermische Behandlung viel eher erreicht, als mit den vorgenannten, jedoch haben diese Systeme den Nachteil der relativ hohen Investitionskosten, da sie komplizierte Konstruktionsmerkmale aufweisen und vor allem die Abscheidung der feinteiligen Feststoffe aus dem Gasstrom Schwierigkeiten bereitet. Nicht abriebfeste Stoffe werden weiter zerkleinert, so dass als zusätzlicher Nachteil oft unerwünschte Teilchengrössenverteilungen erhalten werden.

Die DE-A 2 403 998 beschreibt ein Verfahren und eine Vorrichtung zur Durchführung von Reaktionen zwischen pulver- und gasförmigen Stoffen, insbesondere eine Calcinier- und Reduktionsvorrichtung zur Herstellung von Katalysatoren, die im Prinzip darin besteht, dass der Katalysator-Vorläufer eine senkrecht angeordnete, vibrierende geschlossene Wendel von oben nach unten durchläuft und hierbei mittels eines im Gegenstrom geführten Reduktionsgases in die aktive Form übergeführt wird. Die Energiezufuhr erfolgt dabei durch elektrische Heizelemente, die unter den Wendeln angeordnet sind.

Obwohl man hierbei durch die gleichmässige thermische Behandlung der Katalysatorteilchen und die gleichmässige Einwirkung des Reduktionsgases zu sehr guten Katalysator-Qualitäten kommt, haben diese Vorrichtungen den deutlichen Nachteil, dass sie durch die komplizierten Konstruktionsmerkmale einerseits und den geringen Produktdurchsatz andererseits die Herstellungskosten des Katalysators erheblich erhöhen, bzw. bei einer Erhöhung des Durchsatzes zu minderwertigen Produkten führen.

Dies kann verschiedene Ursachen haben, z.B. unterschiedliche Wegstrecken der Partikel innen und aussen auf der Wendel, die Schwierigkeit, eine Wendel sehr genau mit komplexer geometrischer Form zu konstruieren, unterschiedliche Fliessgeschwindigkeiten der Partikel als Folge unterschiedlicher Korngrössen bzw. als Folge der Umwandlung von Katalysator-Vorläufern in die oxidische bzw. reduzierte Form usw.

So kann z.B. durch Schaugläser beobachtet

werden, dass die Wendelfläche nur zum kleinen Teil vom Behandlungsgut bedeckt wird und dieses hauptsächlich über die Mitte der Wendel hinabläuft.

Aus der DE-B 1 556 053 ist ein Schwingförderer für körnige oder krümelige Güter, insbesondere für Elektrodenmassen, bekannt, dessen Fördertrog mehrere in Förderrichtung sich unter Bildung jeweils eines Spaltes schuppenartig überlappende Abschnitte aufweist, wobei durch die Spalte ein Behandlungsgas zur Kühlung oder Beheizung des Fördergutes eingeführt wird. Die Behandlung von pulverförmigen Katalysatoren und Katalysator-Zwischenprodukten wird in dieser Druckschrift nicht angesprochen. Die Behandlung von pulverförmigem Material ist in einem derartigen Schwingförderer nicht möglich, da das zu behandelnde Material durch das Behandlungsgas aufgewirbelt wird.

Der vorliegenden Erfindung liegt die Aufgabe zugrunde, auf einfache und schnelle Weise eine gleichmässige thermische Behandlung des Gutes zu erzielen.

Gegenstand der Erfindung ist somit ein Verfahren zur thermischen Behandlung von pulverförmigen Katalysatoren und Katalysator-Zwischenprodukten in reduzierender, oxidierender oder Schutzgas-Atmosphäre bei höheren Temperaturen; dieses Verfahren ist dadurch gekennzeichnet, dass das Behandlungsgut in einer waagerechten bzw. mit geringer Neigung zur Waagerechten angeordneten Vibrationsförderrinne bei einer Schichthöhe zwischen etwa 1 und 6 mm und einer Temperatur zwischen 100 und 480°C durch Strahlungswärme von oben erhitzt wird.

Bei der thermischen Behandlung lässt man das Behandlungsgut die Vibrationsförderrinne in geschlossener, gleichmässig hoher Schicht durchlaufen, wobei man vorzugsweise eine Schichthöhe zwischen etwa 2 und 4 mm einstellt.

Die thermische Behandlung kann in einer oder mehreren Vibrationsförderrinnen erfolgen, wobei als Quellen für die Strahlungswärme im allgemeinen elektrisch beheizte Strahlungselemente verwendet werden. Diese sind im allgemeinen im Eingangsteil der Vibrationsförderrinne in grösserer Anzahl vorhanden. Bei der weiteren thermischen Behandlung braucht das Behandlungsgut nicht mehr so stark erhitzt zu werden, es sei denn, dass bei der thermischen Behandlung endotherme Reaktionen stattfinden.

Die Bewegung des Behandlungsgutes in der (oder den) Vibrationsförderrinne(n) kann auf verschiedene Weise gesteuert werden, beispielsweise durch Einstellung der Verweilzeit, die durch Regulierung der Zuteilmenge beeinflusst werden kann. Ferner kann die Bewegung des Behandlungsgutes durch Veränderung der Schwingungsfrequenz und der Schwingungsamplitude gesteuert werden.

Zu diesem Zweck kann auch die Amplitudenrichtung variiert werden, indem der Stosswinkel eines mit der Vibrationsförderrinne kraftschlüssig verbundenen Vibrators verändert wird.

Mit Hilfe der erfindungsgemässen Massnahmen lassen sich verschiedene Schichtstärken von hoher Gleichmässigkeit über die gesamte Fläche der Vibrationsförderrinne konstant aufrechterhalten. Hierbei findet eine gleichmässige Wärmeeinwirkung auf alle Partikel des feinteiligen Behandlungsgutes statt; diese wird nicht nur durch gleiche Verweilzeiten und geringe Schichtstärken erreicht, sondern auch durch die Vibration des Behandlungsgutes mit einer grösseren Horizontalkomponente und einer kleineren Vertikalkomponente; letztere bewirkt, dass sich die vertikale Lage der einzelnen Teilchen in der Schicht ständig ändert. Durch die Vibration wird die Wärmedämmung innerhalb der Schicht weitgehend herabgesetzt. Alle diese Massnahmen bewirken, dass trotz der geringen Schichthöhen beträchtliche Mengendurchsätze an Behandlungsgut pro Zeiteinheit erzielt werden können.

Die der Vibrationsförderrinne zugeführte Heizleistung kann variierbar eingestellt werden, was u.a. von der Art des Behandlungsgutes, der Schichthöhe und der Durchsatzgeschwindigkeit abhängig ist. Die Temperatur bei der thermischen Behandlung wird zweckmässig mittels in der Nähe des Behandlungsgutes angeordneter Temperaturfühler geregelt. Hierbei werden vorzugsweise Thermoelemente verwendet, die entweder im Boden oder oberhalb des Bodens der Vibrationsförderrinne angeordnet sind und die eine genaue Bestimmung der Temperatur des Behandlungsgutes ermöglichen, da die Strahlungswärme im allgemeinen von oben durch das Behandlungsgut wirkt.

In Abhängigkeit von der Art des Behandlungsgutes sind verschiedene Varianten des erfindungsgemässen Verfahrens möglich. Wenn beispielsweise bei der thermischen Behandlung exotherme Reaktionen auftreten, so ist es zweckmässig, bereits in der ersten Vibrationsförderrinne, insbesondere zum Austrittsende hin, zu kühlen. Andererseits kann es beim Auftreten von endothermen Reaktionen manchmal erforderlich sein, das Behandlungsgut über die gesamte Vibrationsförderrinne zu erhitzen bzw. eine oder mehrere beheizte Vibrationsförderrinnen nachzuschalten. Hierbei können sowohl die Heizleistung als auch die Fördergeschwindigkeiten in jeder Rinne individuell geregelt werden.

Je nach dem Behandlungsgut kann die thermische Behandlung in verschiedenen Atmosphären durchgeführt werden. Im einfachsten Fall wird die thermische Behandlung in Gegenwart von Luft durchgeführt. Wenn es sich um ein sauerstoffempfindliches Behandlungsgut handelt, führt man die thermische Behandlung in einer Schutzgasatmosphäre, vorzugsweise in Gegenwart von Stickstoff, $CO_2$ bzw. Edelgasen, durch.

In manchen Fällen umfasst die thermische Behandlung auch eine Reduktionsbehandlung, beispielsweise, wenn oxidische Katalysatoren durch Reduktion zu den entsprechenden Metallen aktiviert werden sollen. In diesem Fall wird die thermische Behandlung in Gegenwart von Reduktionsgasen, vorzugsweise in Gegenwart von Wasserstoff, Kohlenmonoxid oder diese Gase

enthaltenden Gasmischungen durchgeführt.

Insbesondere im letzten Fall ist es zweckmässig, die Vibrationsförderrinnen gegen die äussere Atmosphäre abzudichten.

In einigen Fällen sind die durch Reduktion erhaltenen katalytisch aktiven Metalle pyrophor, d.h. sie können sich auch nach Abkühlung des Behandlungsgutes spontan an der Luft entzünden. In diesem Fall ist es zweckmässig, die katalytisch aktiven Metalle in einer Vibrationsförderrinne, die der Vibrationsförderrinne, in welcher die Reduktion durchgeführt wurde, nachgeschaltet ist, durch Chemisorption von gasförmigen Oxidationsmitteln, vorzugsweise von Luftsauerstoff, mit einer dünnen Oxid-Schutzschicht zu überziehen. Dies geschieht im allgemeinen dadurch, dass der reduzierte und gegebenenfalls abgekühlte Metallkatalysator zunächst in eine Schutzgasatmosphäre geleitet wird, in welche allmählich Luftsauerstoff in steigenden Konzentrationen eingespeist wird. Würde der Katalysator nach der Reduktion sofort der Luft ausgesetzt werden, so wäre die Gefahr einer Selbstentzündung gegeben.

Ein besonderer Vorteil des erfindungsgemässen Verfahrens besteht darin, dass mit Hilfe der Vibrationsförderrinne pulverförmige Produkte mit ziemlich genau limitierter spezifischer Oberfläche hergestellt werden können.

Das erfindungsgemässe Verfahren wird nachstehend anhand der Zeichnung erläutert.

Die Zeichnung zeigt schematisch eine geschlossene Apparatur mit drei Vibrationsförderrinnen 10a, b und c, die durch die elastischen Manschetten 12a, b, c und d miteinander bzw. an einem Ende mit einem Einfülltrichter 14 für das Behandlungsgut und am anderen Ende mit einem Austrittsrohr 16 verbunden sind. Die schwach geneigten Vibrationsförderrinnen 10a bis c werden durch die Vibratoren 18a bis c in Schwingungen versetzt. Die Stossrichtung der Vibratoren verläuft in einem spitzen Winkel zu den Böden der Vibrationsrinnen, so dass die Teilchen der in den Vibrationsförderrinnen enthaltenen Schicht des Behandlungsgutes mit einer grösseren horizontalen und einer kleineren vertikalen Komponente bewegt werden. Die Teilchen hüpfen also gewissermassen in der Vibrationsförderrinne, wobei sie sich allmählich von links nach rechts bewegen. Die Bewegungsgeschwindigkeit des Behandlungsgutes kann beispielsweise mit Hilfe einer durch den Motor 20 angetriebenen Schnekke (nicht dargestellt) variiert werden.

Die Vibrationsförderrinnen 10a bis 10c sind durch die Deckel 22a bis c, die stationär an den Halterungen 24a bis c bzw. 24a' bis 24c' befestigt sind, verschlossen. Da die Vibrationsförderrinnen 10a bis c relativ zu den Deckeln 22a bis c beweglich sind, ist es zweckmässig, entweder einen kleinen Luftspalt freizulassen oder aber beim Arbeiten in einer Schutzgasatmosphäre und insbesondere in einer reduzierenden Atmosphäre elastische Dichtungselemente (nicht dargestellt) zwischen den Vibrationsförderrinnen 10a bis c und den Deckeln 22a bis c vorzusehen.

Die Vibrationsförderrinne 10a dient im allgemeinen als Aufheizzone für das Behandlungsgut. Zu diesem Zweck sind am Deckel 22a mehrere Strahlungsheizelemente 26 angebracht, durch die das Behandlungsgut von oben erhitzt wird. Am Boden bzw. dicht oberhalb des Bodens der Vibrationsförderrinne 10a befinden sich im allgemeinen auch Thermoelemente (nicht dargestellt), um die Temperatur des Behandlungsgutes zu messen und um die Heizleistung der Strahlungsheizelemente 26 über geeignete Steuereinrichtungen zu regeln.

In der Vibrationsförderrinne 10b erfolgt im allgemeinen die eigentliche thermische Behandlung, z.B. die Calcinierung der Katalysator-Vorstufe. Zu diesem Zweck sind am Deckel 22b ebenfalls Strahlungsheizelemente (nicht dargestellt) angebracht. Die Rinne 10b kann ferner bereits mit Einrichtungen zum Einleiten eines Kühlgases versehen sein, insbesondere am Austrittsende.

Im allgemeinen erfolgt die Kühlung des Behandlungsgutes jedoch in der Vibrationsförderrinne 10c, die im allgemeinen keine Heizelemente, dafür aber Kühleinrichtungen enthält. Es können beispielsweise in den Boden der Rinne bzw. in den Deckel 22c eingelassene Rohre vorgesehen sein, die von einem Kühlmedium durchströmt werden. Vorzugsweise wird jedoch ein Kühlgas eingeführt, und zwar von oben durch den Deckel 22c bzw. durch das Austrittsrohr 16. Das Kühlgas kann beispielsweise ein Schutzgas sein, dem eine kleine Menge Luft zugesetzt ist, um auf einem durch Reduktion erhaltenen aktiven Metallkatalysator eine dünne Oxid-Schutzschicht zu erzeugen, bevor der Katalysator durch das Austrittsrohr 16 in die Atmosphäre ausgeschleust wird.

Sämtliche Vibrationsförderrinnen 10a bis 10c bzw. Deckel 22a bis c können individuell mit Einrichtungen zum Zu- und Ableiten von Gasen versehen sein.

Die thermische Behandlung schliesst chemische Prozesse ein, wie Calcinieren oder Zersetzungsreaktionen, die unter Wärmeeinwirkung stattfinden oder thermisch initiiert werden. Ferner gehören dazu auch solche Vorgänge, die bei erhöhter Temperatur (im allgemeinen über 100°C) in der festen Phase und in Anwesenheit einer reduzierenden oder oxidierenden Atmosphäre ablaufen können und einen endothermen bzw. exothermen Charakter haben (z.B. Änderungen der Kristallstruktur). In vielen Fällen laufen die Prozesse nicht getrennt, sondern miteinander ab.

Beispielsweise findet bei der thermischen Behandlung des erfindungsgemäss verarbeiteten Behandlungsgutes zunächst eine Entfernung des freien, d.h. physikalisch gebundenen Wassers bei Temperaturen von etwa 100°C statt (z.B. bei Aktivkohle, Molekularsieben, $SiO_2$). Bei Temperaturen über 100°C wandeln sich anorganische Hydrate in wasserfreie Substanzen um. Bei höheren Temperaturen kann auch eine Wasserabspaltung durch Kondensation von OH-Gruppen stattfinden (z.B. bei der Herstellung von $Al_2O_3$, MgO und

$Fe_2O_3$ aus den entsprechenden Hydroxiden).

Thermische Zersetzungsreaktionen finden beispielsweise bei Carbonaten bzw. basischen Carbonaten, Nitraten und Chromaten der Übergangsmetalle sowie deren organischen Salzen (Oxalate, Formiate usw.) statt. Auch die Ammoniumkomplexe und Ammoniumsalze dieser Metalle werden thermisch zersetzt, wobei alle diese Substanzen entweder in reiner Form, in Form von Gemischen oder auf Träger aufgebracht vorliegen können (z.B. Herstellung von NiO, CuO, CoO und $CuCr_2O_4$).

Ferner können reduktive und oxidative Umwandlungsprozesse stattfinden. Bei erhöhten Temperaturen und in reduzierender Atmosphäre (z.B. $H_2$, CO) werden die Oxide der Übergangsmetalle in die entsprechenden Elemente umgewandelt. Unter oxidativen Bedingungen (Luft, $O_2$), erfolgt die Umsetzung von Übergangsmetallsulfiden zu den entsprechenden Metalloxiden oder eine Erhöhung des Oxidationsgrades der oxidischen Verbindungen. Auch diese Stoffe können in reiner Form, im Gemisch oder an Trägern gebunden vorliegen. Beispiele sind die Reduktion von NiO, CuO, CoO, $Fe_2O_3$ usw., die Abröstung von Mo-, Zn-, Cu-, und Fe-Sulfiden sowie der oxidative Aufschluss von Mn-, V- und W-haltigen Schlacken.

Die Erfindung ist durch das nachstehende Ausführungsbeispiel erläutert.

Beispiel

Ein bekannter Katalysator-Vorläufer, nämlich basisches Kupferammoniumchromat zersetzt sich thermisch gemäss der folgenden Gleichung:

$$2\,Cu\,(NH_4\,OH\,CrO_4 \rightarrow 2\,CuO \cdot Cr_2O_3 + N_2 + 5H_2O$$

Die optimalen Reaktionstemperaturen liegen zwischen 350 bis 450°C, wobei im unteren Temperaturbereich Katalysatoren mit höherer spezifischer Oberfläche und guter Aktivität für die Hydrierung von Carbonylverbindungen, im oberen Temperaturbereich Katalysatoren mit niedriger spezifischer Oberfläche erhalten werden, die für die Hydrierung von Fettsäuren und Fettsäuremethylestern geeignet sind. Die thermische Zersetzung verläuft exotherm, weshalb zur Erzielung der gewünschten spezifischen Eigenschaften der hergestellten Kupferchromitkatalysatoren die Reaktionswärme in kontrollierter Weise abgeführt werden muss.

Unter Anwendung der vorstehend beschriebenen Vorrichtung wurde Kupferammoniumchromat mit einer Korngrösse von 40 bis 120 µm bei einem Materialfluss von 3 kg/std auf die Vibrationsförderrinne aufgegeben. Es wurde unter einer Schutzgasatmosphäre (Stickstoff mit einer Strömungsgeschwindigkeit von 4 m³/Std) gearbeitet. Die Verweilzeit des eingeschleusten Materials betrug 6 min. Die thermische Zersetzung wurde bei den in der nachstehenden Tabelle angegebenen Temperaturen durchgeführt.

Zum Vergleich wurde das gleiche basische Kupferammoniumchromat in einem Hordenofen auf Metallblechen in einer Schichthöhe von etwa 5 cm langsam auf 350°C aufgeheizt. Nach Beginn der Zersetzungsreaktion stieg die Temperatur auf etwa 400 bis 420°C und wurde etwa 30 min auf der Endtemperatur von 400 bis 420°C gehalten. Die spezifischen Oberflächen ($O_s$ in m²/g) wurden nach der BET-Methode bestimmt; sie sind ebenfalls in der nachstehenden Tabelle angegeben. Die Aktivitäten des erfindungsgemäss behandelten Katalysators und des Vergleichskatalysators wurden miteinander verglichen. Es wurde einmal die Geschwindigkeit konstante $k_1$ (mol/h Kat.) der Furfuralhydrierung (FAL-Hydrierung) bei 150°C, einem Wasserstoffdruck von 100 bar und einer Katalysatormenge von 0,6 Gew.-%, bezogen auf das Furfural, bestimmt; zum anderen wurde eine Fettsäuremethylester-Hydrierung (FSM-Hydrierung) bei 250°C, einem Wasserstoffdruck von 200 bar und einer Katalysatormenge von 2,0 Gew.-%, bezogen auf eingesetzten FSM, durchgeführt. Die Ergebnisse sind in der nachstehenden Tabelle angegeben.

| Zersetzungs-Temperatur (°C) Erfindungsgem. Kat. | $O_s$ (m²/g) | Aktivität $k_1$* (mol/h g Kat.) FAL-Hydrierung | FSM-Hydrierung |
|---|---|---|---|
| 350 | 130 | 7,2 | -0,7 |
| 400 | 100 | 4,8 | -0,1 |
| 425 | 75 | 2,2 | -1,3 |
| 450 | 28 | 1,5 | -1,5 |
| 480 | 18 | 1,0 | -1,2 |
| Vergleichskatalysator 350–420 | 30 ± 5 | 0,8 ± 0,2 | -0,7 ± 0,3 |

* Die negativen Werte für $k_1$ beziehen sich auf die Abnahme der Esterkonzentration.

Die Gegenüberstellung der Werte der Aktivitätskonstante $k_1$ zeigt nicht nur, dass bei fast allen Einstellungen der Vibrationsförderrinne höhere Aktivitäten des Katalysators erhalten werden, sondern es ergibt sich auch, dass nach Feststellung der optimalen Arbeitsbedingungen der Vibrationsförderrinne Calcinierungsaktivitäten erzielt werden, die wesentlich höher liegen als die des nach herkömmlicher Weise thermisch behandelten Katalysators.

Bezüglich der Wirtschaftlichkeit der thermischen Zersetzung mit Vibrationsförderrinnen ist zu sagen, dass bei Verwendung eines Geräts mit einer Länge von etwa 7 m und einer Rinnenbreite von etwa 1 m etwa 2000 kg/Tag Kupferchromitkatalysator erhalten werden, d.h. der Durchsatz ist wesentlich höher als bei Verwendung eines Wendelförderers ähnlicher Dimensionen.

## Patentansprüche

1. Verfahren zur thermischen Behandlung von pulverförmigen Katalysatoren und Katalysator-Zwischenprodukten in reduzierender, oxidierender oder Schutzgas-Atmosphäre bei höheren

Temperaturen, dadurch gekennzeichnet, dass das Behandlungsgut in einer waagerechten bzw. mit geringer Neigung zur Waagerechten angeordneten Vibrationsförderrinne bei einer Schichthöhe zwischen etwa 1 und 6 mm und einer Temperatur zwischen 100 und 480°C durch Strahlungswärme von oben erhitzt wird.

2. Verfahren nach Anspruch 1, dadurch gekennzeichnet, dass man die Schichthöhe zwischen etwa 2 und 4 mm einstellt.

3. Verfahren nach Anspruch 1 oder 2, dadurch gekennzeichnet, dass man die Bewegung des Behandlungsgutes in der Vibrationsförderrinne durch Einstellung der Verweilzeit, der Schwingungsfrequenz, der Schwingungsamplitude und der Amplitudenrichtung steuert.

4. Verfahren nach einem der Ansprüche 1 bis 3, dadurch gekennzeichent, dass man die Heizleistung der Vibrationsförderrinne variierbar einstellt und die Temperatur mittels in der Nähe des Behandlungsgutes angeordneter Temperaturfühler kontrolliert.

5. Verfahren nach einem der Ansprüche 1 bis 4, dadurch gekennzeichnet, dass man das Behandlungsgut beim Auftreten exothermer Reaktionen bereits in der Vibrationsförderrinne kühlt.

6. Verfahren nach einem der Ansprüche 1 bis 5, dadurch gekennzeichnet, dass man die thermische Behandlung in Gegenwart von Stickstoff, $CO_2$ bzw. Edelgasen als Schutzgasen durchführt.

7. Verfahren nach einem der Ansprüche 1 bis 5, dadurch gekennzeichnt, dass man die thermische Behandlung in Gegenwart von Wasserstoff, Kohlenmonoxid oder diese Gase enthaltenden Gasmischungen als Reduktionsgasen durchführt.

8. Verfahren nach einem der Ansprüche 1 bis 5 und 7, dadurch gekennzeichnet, dass man durch thermische Behandlung in reduzierender Atmosphäre erhaltene, katalytisch aktive Metalle durch Chemisorption von gasförmigen Oxidationsmitteln, vorzugsweise von Luftsauerstoff, mit einer dünnen Oxid-Schutzschicht überzieht.

## Claims

1. Process for the thermal treatment of pulverulent catalysts and catalyst intermediate products in a reducing, oxidising or protective gas atmosphere at high temperatures, characterised in that the material to be treated is heated by radiant heat from above in a vibrating conveyor chute, which is horizontal or arranged at a slight inclination to the horizontal, at a layer depth of between about 1 and 6 mm and at a temperature of between 100 and 480°C.

2. Process according to Claim 1, characterised in that the layer depth is adjusted to between about 2 and 4 mm.

3. Process according to Claim 1 or Claim 2, characterised in that the movement of the material to be treated in the vibrating conveyor chute is controlled by adjusting the residence time, vibration frequency, vibration amplitude and the amplitude direction.

4. Process according to one of Claims 1 to 3, characterised in that the heating capacity of the vibrating conveyor chute is variably adjusted and the temperature is controlled by means of temperature sensors disposed in the vicinity of the material to be treated.

5. Process according to one of Claims 1 to 4, characterised in that if exothermic reactions take place the material to be treated is already cooled in the vibrating conveyor chute.

6. Process according to one of Claims 1 to 5, characterised in that the thermal treatment is carried out in the presence of nitrogen, $CO_2$ or inert gases as protective gases.

7. Process according to one of Claims 1 to 5, characterised in that the thermal treatment is carried out in the presence of hydrogen, carbon monoxide or gas mixtures containing these gases as redcucing gases.

8. Process according to one of Claims 1 to 5 and 7, characterised in that catalytically active metals, obtained by thermal treatment in a reducing atmosphere, are coated with a thin oxide protective layer by chemisorption of gaseous oxidising agents, preferably of atmospheric oxygen.

## Revendications

1. Procédé de traitement thermique de catalyseurs en poudre et de produits intermédiaires de catalyseurs en atmosphère réductrice, oxydante ou inerte, à des températures élevées, caractérisé en ce qu'on chauffe par le haut par rayonnement thermique le matériau à traiter dans un transporteur vibrant à gouttière horizontal ou légèrement incliné par rapport à l'horizontal, à une épaisseur de couche comprise entre environ 1 et 6 mm et une température comprise entre 100 et 480°C.

2. Procédé selon la revendication 1, caractérisé en ce qu'on ajuste l'épaisseur de couche entre environ 2 et 4 mm.

3. Procédé selon la revendication 1 ou 2, caractérisé en ce qu'on commande le déplacement du matériau à traiter dans le transporteur vibrant à gouttière en réglant la durée de séjour, la fréquence de vibration, l'amplitude de vibration et la direction de l'amplitude.

4. Procédé selon l'une des revendications 1 à 3, caractérisé en ce que l'on réalise un réglage variable de la puissance de chauffage du transporteur vibrant à gouttière, et l'on contrôle la température au moyen de sondes de température situées au voisinage du matériau à traiter.

5. Procédé selon l'une des revendications 1 à 4, caractérisé en ce que l'on refroidit déjà le matériau à traiter, lorsqu'il se produit des réactions exothermiques, dans le transporteur vibrant à gouttière.

6. Procédé selon l'une des revendications 1 à 5, caractérisé en ce qu'on effectue le traitement thermique en présence d'azote, de $CO_2$ ou de gaz rares, comme gaz inertes.

7. Procédé selon l'une des revendications 1 à 5, caractérisé en ce qu'on effectue le traitement

thermique en présence d'hydrogène, de monoxyde de carbone ou de mélanges gazeux renfermant ces gaz, comme gaz réducteurs.

8. Procédé selon l'une des revendications 1 à 5, et 7, caractérisé en ce que l'on recouvre les métaux catalytiquement actifs obtenus par traitement thermique en atmosphère réductrice d'une mince couche d'oxydes protectrice par chimisorption d'oxydants gazeux, de préférence d'oxygène de l'air.

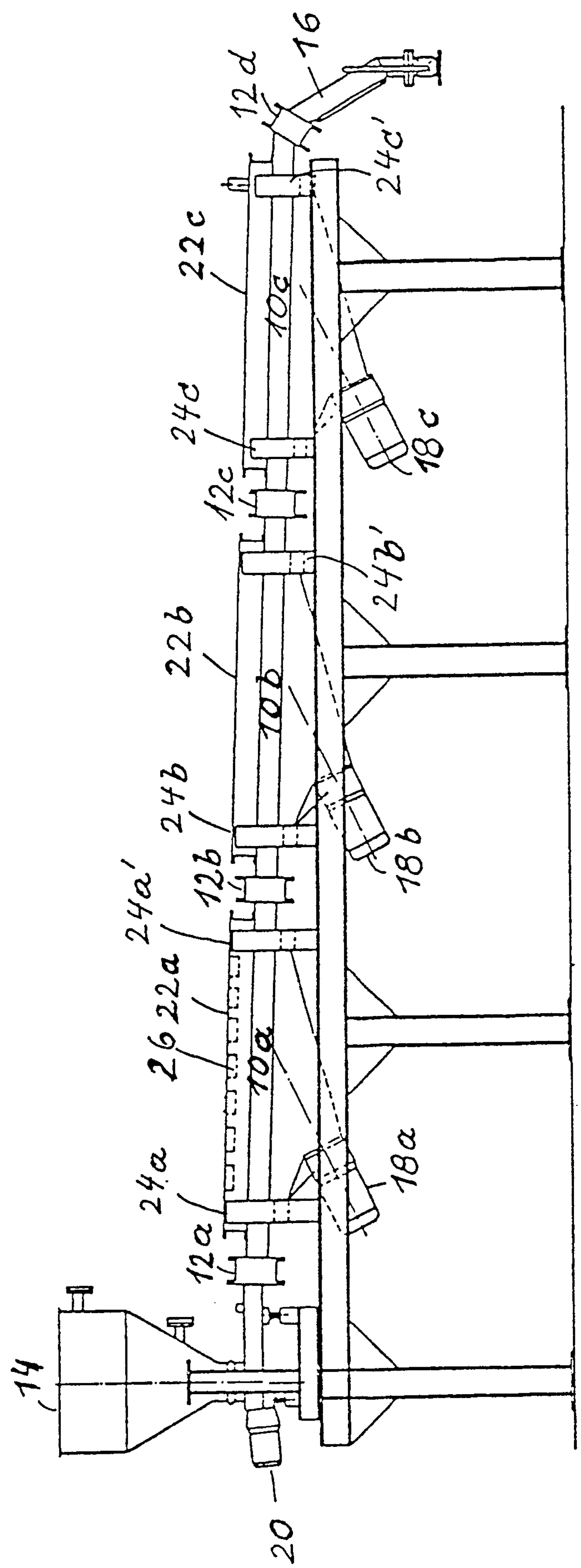
16
12d
24c'
22c
10c
24c
18c
12c
24b'
22b
10b
24b
18b
12b
24a'
22a
26
10a
18a
24a
12a
14
20